# EUROPÄISCHE PATENTANMELDUNG

(11) **EP 4 534 389 A1**
(43) Veröffentlichungstag der Anmeldung: **09.04.2025**
(21) Anmeldenummer: 24191372.2
(22) Anmeldetag: 29.07.2024
(51) Int. Cl.: B62D 5/065, B62D 5/06

(54) **LENKSYSTEM FÜR EIN KRAFTFAHRZEUG**

(30) Priorität: 08.09.2023 DE 102023124286
(71) Anmelder: Pump Technology Solutions PS GmbH, 13437 Berlin (DE)
(72) Erfinder: Arslan, Erkan, 13437 Berlin (DE); Peng, Daoming, 13437 Berlin (DE); Hoeppner, Johannes, 13437 Berlin (DE)
(74) Vertreter: Lorenz & Kollegen

(57) **Zusammenfassung**

Ein Lenksystem (1) für ein Kraftfahrzeug weist folgende Merkmale auf:
- ein mit einem Hydraulikmedium betriebenes Lenkgetriebe (2),
- eine mit einem ersten Elektromotor (3) angetriebene erste Hydraulikpumpe (4) zur Hauptversorgung des Lenkgetriebes (2),
- eine mit einem zweiten Elektromotor (5) angetriebene zweite Hydraulikpumpe (6) zur Notversorgung des Lenkgetriebes (2).

## Beschreibung

Die Erfindung betrifft ein Lenksystem für ein Kraftfahrzeug sowie ein Verfahren zum Betreiben eines solchen Lenksystems.

Aus der DE 10 2015 109 508 A1 ist ein derartiges Lenksystem eines Kraftfahrzeugs bekannt.

Bei solchen elektrohydraulischen Lenksystemen ist es üblich und teilweise gesetzlich vorgeschrieben, eine Redundanz für die Hydraulikpumpeneinheit vorzusehen. Gemäß dem allgemeinen Stand der Technik wird dies häufig dadurch realisiert, dass der die Hydraulikpumpe antreibende Elektromotor zwei Wicklungen aufweist, so dass bei Ausfall einer der Wicklungen der Elektromotor mit der anderen Wicklung betrieben werden kann. Eine weitere, oftmals, verwendete Realisierung ist der Einsatz zweier gleich dimensionierter Elektromotoren.

Durch die zweite Wicklung vergrößern sich sowohl die Länge als auch der Querschnitt des Elektromotors, was zu vergleichsweise großen Elektromotoren führt, wodurch die meist ohnehin schwierige Einbausituation im Fahrzeug noch verschärft wird. Des Weiteren ist die Komplexität der bekannten Lösungen recht hoch und es ergeben sich insbesondere Probleme, ein und dieselbe Kombination eines Elektromotors mit einer Hydraulikpumpe bei unterschiedlichen Fahrzeugen einzusetzen und eine ideale Auslegung (Magnetkreis, Dimensionierung, Leichtbau, usw.) für den Applikationsfall zu realisieren.

Ein weiterer Nachteil der bekannten Lösungen besteht darin, dass Schutzmechanismen, wie beispielsweise die elektromagnetische Verträglichkeit, für beide Antriebe, d. h. beide Wicklungen, ausgelegt werden müssen, was teilweise zu sehr aufwändigen Lösungen führt.

Es ist daher Aufgabe der vorliegenden Erfindung, ein Lenksystem für ein Kraftfahrzeug zu schaffen, das eine hohe Sicherheit bietet und einen geringen Bauraum erfordert.

Erfindungsgemäß wird diese Aufgabe durch die in Anspruch 1 genannten Merkmale gelöst.

Erfindungsgemäß weist das Lenksystem ein mit einem Hydraulikmedium betriebenes Lenkgetriebe, eine mit einem ersten Elektromotor angetriebene erste Hydraulikpumpe zur Hauptversorgung des Lenkgetriebes und eine mit einem zweiten Elektromotor angetriebene zweite Hydraulikpumpe zur Notversorgung des Lenkgetriebes auf.

Im Vergleich zu bekannten Lösungen kommen bei dem erfindungsgemäßen Lenksystem zwar zwei Elektromotoren und zwei Hydraulikpumpen zum Einsatz, die Elektromotoren müssen jedoch jeweils nur eine Wicklung aufweisen, da bei Ausfall des ersten Elektromotors der zweite Elektromotor zum Einsatz kommt. Dadurch können beide Elektromotoren eine wesentlich geringere Größe als der bei bekannten Lösungen eingesetzte Elektromotor aufweisen, wodurch sich auch die Größe der elektrohydraulischen Pumpeinheit und des gesamten elektrohydraulischen Lenksystems verringern kann.

Insbesondere der zweite, jedoch auch der erste Elektromotor kann eine sehr geringe Baugröße aufweisen, wodurch sich eine wesentlich höhere Flexibilität bezüglich des Einbauortes derselben ergeben. Als der zweite Elektromotor kann vorteilhafterweise ein technisch und kommerziell sehr vorteilhafter Standardmotor eingesetzt werden.

Ein weiterer erheblicher Vorteil der erfindungsgemäßen Lösung besteht darin, dass sowohl die beiden Elektromotoren als auch die beiden Hydraulikpumpen für ihren jeweiligen Anwendungszweck optimiert werden können und somit über ihren gesamten Lebenszyklus eine Steigerung des Wirkungsgrads erzielen. Außerdem ermöglicht die erfindungsgemäße Lösung eine Vereinheitlichung, Standardisierung und Harmonisierung der Prozesskette, wodurch sie auch bis hin zu einer Baukastenstrategie vereinheitlicht und bei unterschiedlichen Fahrzeugen eingesetzt werden.

Ein weiterer Vorteil der erfindungsgemäßen Lösung gegenüber dem Stand der Technik besteht darin, dass die zweite Hydraulikpumpe bei einem Ausfall der ersten Hydraulikpumpe deren Funktion zumindest im Sinne einer Notversorgung des Lenkgetriebes übernehmen kann, was bei bekannten Lösungen mit nur einer Hydraulikpumpe nicht der Fall ist. Der zweite Elektromotor mit der zweiten Hydraulikpumpe stellt damit eine redundante Lösung zu dem ersten Elektromotor mit der ersten Hydraulikpumpe dar.

In einer sehr vorteilhaften Weiterbildung der Erfindung kann vorgesehen sein, dass der erste Elektromotor bezüglich seiner Leistung größer dimensioniert ist als der zweite Elektromotor, und dass die erste Hydraulikpumpe bezüglich ihres geometrischen Fördervolumens größer dimensioniert ist als die zweite Hydraulikpumpe. Durch eine solche Anpassung sowohl der Elektromotoren als auch der Hydraulikpumpen an den jeweiligen Einsatzzweck können die Baugrö-βen sowohl der Elektromotoren als auch der Hydraulikpumpen weiter verringert werden.

Um eine ausreichende Leistung des zweiten Elektromotors sicherzustellen, kann des Weiteren vorgesehen sein, dass derselbe in einem Hochvoltbereich betrieben wird.

Wenn in diesem Zusammenhang der zweite Elektromotor in einem Niedrigvoltbereich betrieben wird, so lässt sich der zweite Elektromotor zum einen bezüglich seiner Baugröße deutlich geringer dimensionieren und kann zum anderen über eine andere Stromversorgung als der erste Elektromotor versorgt werden. Außerdem ermöglicht dies eine Verwendung von applikationsoptimalen und technisch sowie kommerziell vorteilhaften Elektromotoren.

Wenn in einer weiteren vorteilhaften Weiterbildung der Erfindung eine gemeinsame Steuereinrichtung für den ersten Elektromotor und den zweiten Elektromotor vorgesehen ist, so lässt sich der Betrieb der beiden Elektromotoren auf sehr einfache und unkomplizierte Weise steuern.

Eine weitere vorteilhafte Ausgestaltung der Erfindung kann darin bestehen, dass die zweite Hydraulikpumpe als Unterstützung für die erste Hydraulikpumpe einsetzbar ist. Auf diese Weise kann in besonderen Fällen, in denen das Lenkgetriebe eine sehr hohe hydraulische Unterstützung benötigt, diese Unterstützung mittels beider Hydraulikpumpen erfolgen, wobei die zweite Hydraulikpumpe eine Boost-Versorgung übernimmt.

In einer weiteren vorteilhaften Ausgestaltung der Erfindung kann vorgesehen sein, dass die zweite Hydraulikpumpe zur Kühlung einer Batterie des Kraftfahrzeugs einsetzbar ist. Dies stellt eine alternative Nutzung der zweiten Hydraulikpumpe dar, wodurch sich nicht nur ein Mehrwert für das Kraftfahrzeug ergibt, sondern auch in den Fällen, in denen die zweite Hydraulikpumpe nicht zur Versorgung des Lenkgetriebes benötigt wird, eine sinnvolle Nutzung derselben gegeben ist.

Dies ist auch der Fall, wenn zusätzlich oder alternativ die zweite Hydraulikpumpe zur Versorgung eines Getriebes des Kraftfahrzeugs einsetzbar ist.

Um die zweite Hydraulikpumpe auf sehr einfache Weise für ihren jeweiligen Einsatzzweck verwenden zu können, kann in einer weiteren vorteilhaften Ausgestaltung der Erfindung ein Ventil zur Umschaltung der Versorgung des Lenkgetriebes, der Batterie und/oder des Getriebes durch die zweite Hydraulikpumpe vorgesehen sein.

Ein Verfahren zum Betreiben eines derartigen Lenkgetriebes ist in Anspruch 10 angegeben.

Dabei wird das Lenkgetriebe im Normalbetrieb hauptsächlich von der ersten Hydraulikpumpe und im Notbetrieb von der zweiten Hydraulikpumpe mit Hydraulikmedium versorgt.

Mit diesem Verfahren lässt sich das erfindungsgemäße Lenksystem besonders vorteilhaft betreiben.

Nachfolgend ist ein Ausführungsbeispiel der Erfindung anhand der Zeichnung prinzipmäßig dargestellt.

Es zeigt:

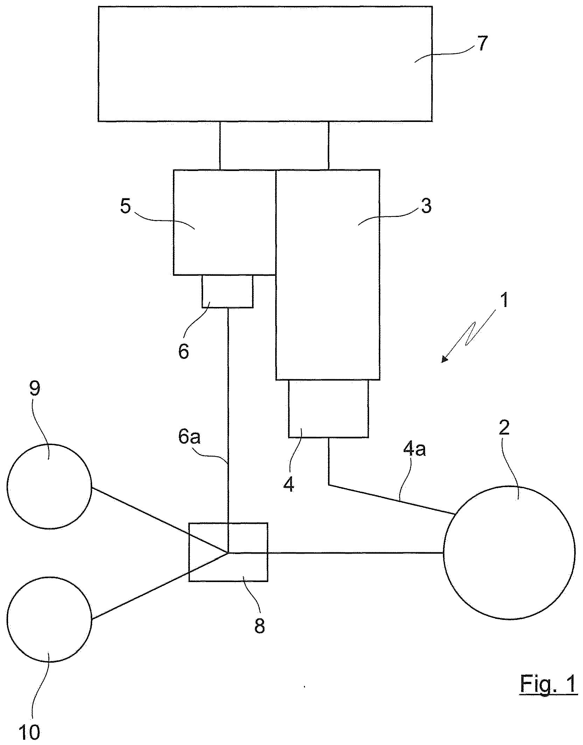

Fig. 1 eine sehr schematische Darstellung eines erfindungsgemäßen Lenksystems.

Fig. 1 zeigt ein Lenksystem 1 für ein nicht dargestelltes Kraftfahrzeug. Bei dem Kraftfahrzeug handelt es sich insbesondere um ein Nutzfahrzeug, wie beispielsweise einen LKW, ein Baustellenfahrzeug, einen Bus oder dergleichen. Das Lenksystem 1 weist ein Lenkgetriebe 2 auf, das als elektrohydraulisches Lenkgetriebe ausgebildet ist und in an sich bekannter Weise betrieben werden kann. Da die einzelnen Bauteile und die Funktionsweise des Lenkgetriebes 2 grundsätzlich bekannt sind, wird hierin nicht näher darauf eingegangen.

Das Lenksystem 1 weist des Weiteren eine mit einem ersten Elektromotor 3 angetriebene erste Hydraulikpumpe 4 und eine mit einem zweiten Elektromotor 5 angetriebene zweite Hydraulikpumpe 6 auf. Dabei dient die erste Hydraulikpumpe 4 zur Hauptversorgung des Lenkgetriebes 2. Hierzu führt von der ersten Hydraulikpumpe 4 eine Hydraulikleitung 4a zu dem Lenkgetriebe 2. Die zweite Hydraulikpumpe 6 dient dagegen zur Notversorgung des Lenkgetriebes 2. Der Begriff "Hauptversorgung" bezeichnet den normalen Betrieb des Lenkgetriebes 2, wie er üblicherweise beim Betrieb des Kraftfahrzeugs vorkommt. Der Begriff "Notversorgung" bezeichnet beispielsweise Fälle, in denen der erste Elektromotor 3 und/oder die erste Hydraulikpumpe 4 ausfallen und das Lenkgetriebe 2 dennoch betrieben werden muss. Bei diesem Notbetrieb des Lenkgetriebes 2 kann zum Beispiel ein höherer Kraftaufwand zum Lenken, ein kleinerer Lenkwinkel oder ähnliches auftreten. Der zweite Elektromotor 5 mit der zweiten Hydraulikpumpe 6 stellt damit eine redundante Lösung zu dem ersten Elektromotor 3 mit der ersten Hydraulikpumpe 4 dar. Neben der Notversorgung kann die zweite Hydraulikpumpe 6 auch als Unterstützung für die erste Hydraulikpumpe 4 eingesetzt werden, beispielsweise in Fällen, in denen eine besonders hohe Lenkunterstützung für das Kraftfahrzeug notwendig ist.

Wie in Fig. 1 erkennbar ist, sind sowohl der erste Elektromotor 3 als auch die erste Hydraulikpumpe 4 jeweils größer als der zweite Elektromotor 5 und die zweite Hydraulikpumpe 6. Des Weiteren ist der erste Elektromotor 3 bezüglich seiner Leistung größer dimensioniert als der zweite Elektromotor 5 und die erste Hydraulikpumpe 4 ist bezüglich ihres geometrischen Fördervolumens größer dimensioniert als die zweite Hydraulikpumpe 6. Die beiden Elektromotoren 3 und 5 sowie die beiden Hydraulikpumpen 4 und 6 sind demnach ihrem jeweiligen Anwendungszweck angepasst. Des Weiteren kann der erste Elektromotor 3 in einem Hochvoltbereich, beispielsweise von 350 bis 1.000 Volt, und der zweite Elektromotor 5 in einem Niedrigvoltbereich, beispielsweise von 12 bis 48 Volt, betrieben werden. Beispielsweise kann der erste Elektromotor 3 von einer Traktionsbatterie eines Elektrofahrzeugs und der zweite Elektromotor 5 von einer Starterbatterie versorgt werden. Jedoch sind auch andere als die genannten Spannungen möglich und die beiden Elektromotoren 3 und 5 können auch mit derselben Spannung betrieben werden. Beispielsweise kann der zweite Elektromotor 5 auch für eine Hochvolt-Lösung angepasst werden.

Die erste Hydraulikpumpe 4 ist direkt mit dem ersten Elektromotor 3 verbunden, zum Beispiel indem eine Ausgangswelle des Elektromotors 3 zugleich die Antriebswelle der beispielsweise als Flügelzellenpumpe ausgebildeten ersten Hydraulikpumpe 4 ist. In ähnlicher Weise ist auch die zweite Hydraulikpumpe 6 direkt mit dem zweiten Elektromotor 5 verbunden. Diese jeweiligen Verbindungen können auf an sich bekannte Art und Weise ausgeführt sein. Im vorliegenden Fall ist außerdem der zweite Elektromotor 5 an dem Gehäuse des ersten Elektromotors 3 angebracht. Es wäre jedoch zum Beispiel aus Bauraumgründen auch möglich, den zweiten Elektromotor 5 mit der daran angebrachten zweiten Hydraulikpumpe 6 an einem anderen Ort des Kraftfahrzeugs anzubringen als den ersten Elektromotor 3 mit der ersten Hydraulikpumpe 4.

Fig. 1 zeigt des Weiteren eine Steuereinrichtung 7, die den ersten Elektromotor 3 und den zweiten Elektromotor 5 gemeinsam steuert. Dabei können der zweite Elektromotor 5 und damit die von demselben betriebene zweite Hydraulikpumpe 6 vollkommen unabhängig von dem ersten Elektromotor 3 und somit der von demselben betriebenen ersten Hydraulikpumpe 4 verwendet werden. Die Steuereinrichtung 7 kann auch körperlich mit dem ersten Elektromotor 3 und/oder dem zweiten Elektromotor 5 verbunden sein.

Da sich das von den beiden Hydraulikpumpen 4 und 6 erzeugte Fördervolumen aus deren geometrischem Fördervolumen und der Drehzahl ergibt, umfasst die Steuerung des jeweiligen Elektromotors 3 bzw. 5 gleichzeitig die Steuerung der jeweiligen Hydraulikpumpe 4 bzw. 6.

Fig. 1 zeigt des Weiteren ein Ventil 8, zu dem von der zweiten Hydraulikpumpe 6 eine Hydraulikleitung 6a führt. Das Ventil 8 dient zur Umschaltung der Versorgung des Lenkgetriebes 2, einer Batterie 9 des Kraftfahrzeugs und/oder eines Getriebes 10 des Kraftfahrzeugs durch die zweite Hydraulikpumpe 6. Hierzu verlaufen von dem Ventil 8 jeweilige Hydraulikleitungen zu dem Lenkgetriebe 2, der Batterie 9 und dem Getriebe 10. Die zweite Hydraulikpumpe 6 ist demnach zur Kühlung der Batterie 9 und/oder des Getriebes 10 des Kraftfahrzeugs einsetzbar. Grundsätzlich ist der Einsatz der zweiten Hydraulikpumpe 6 auch für andere lenkungsfremde Anwendungen denkbar.

## Patentansprüche

1. Lenksystem (1) für ein Kraftfahrzeug, mit folgenden Merkmalen:
- einem mit einem Hydraulikmedium betriebenen Lenkgetriebe (2),
- einer mit einem ersten Elektromotor (3) angetriebenen ersten Hydraulikpumpe (4) zur Hauptversorgung des Lenkgetriebes (2),
- einer mit einem zweiten Elektromotor (5) angetriebenen zweiten Hydraulikpumpe (6) zur Notversorgung des Lenkgetriebes (2).

2. Lenksystem nach Anspruch 1,
**dadurch gekennzeichnet, dass**
der erste Elektromotor (3) bezüglich seiner Leistung größer dimensioniert ist als der zweite Elektromotor (5), und dass die erste Hydraulikpumpe (4) bezüglich ihres geometrischen Fördervolumens größer dimensioniert ist als die zweite Hydraulikpumpe (6).

3. Lenksystem nach Anspruch 1 oder 2,
**dadurch gekennzeichnet, dass**
der erste Elektromotor (3) in einem Hochvoltbereich betrieben wird.

4. Lenksystem nach Anspruch 1, 2 oder 3,
**dadurch gekennzeichnet, dass**
der zweite Elektromotor (5) in einem Niedrigvoltbereich betrieben wird.

5. Lenksystem nach einem der Ansprüche 1 bis 4,
**dadurch gekennzeichnet, dass**
eine gemeinsame Steuereinrichtung (7) für den ersten Elektromotor (3) und den zweiten Elektromotor (5) vorgesehen ist.

6. Lenksystem nach einem der Ansprüche 1 bis 5,
**dadurch gekennzeichnet, dass**
die zweite Hydraulikpumpe (6) als Unterstützung für die erste Hydraulikpumpe (4) einsetzbar ist.

7. Lenksystem nach einem der Ansprüche 1 bis 6,
**dadurch gekennzeichnet, dass**
die zweite Hydraulikpumpe (6) zur Kühlung einer Batterie (9) des Kraftfahrzeugs einsetzbar ist.

8. Lenksystem nach einem der Ansprüche 1 bis 7,
**dadurch gekennzeichnet, dass**
die zweite Hydraulikpumpe (6) zur Versorgung eines Getriebes (10) des Kraftfahrzeugs einsetzbar ist.

9. Lenksystem nach Anspruch 7 oder 8,
**dadurch gekennzeichnet, dass**
ein Ventil (8) zur Umschaltung der Versorgung des Lenkgetriebes (2), der Batterie (9) und/oder des Getriebes (10) durch die zweite Hydraulikpumpe (6) vorgesehen ist.

10. Verfahren zum Betreiben eines Lenksystems nach einem der Ansprüche 1 bis 9, wobei das Lenkgetriebe (2) im Normalbetrieb hauptsächlich von der ersten Hydraulikpumpe (4) mit Hydraulikmedium versorgt wird, und wobei das Lenkgetriebe (2) im Notbetrieb von der zweiten Hydraulikpumpe (6) mit Hydraulikmedium versorgt wird.
